(19) Europäisches Patentamt
European Patent Office
Office européen des brevets

(11) **EP 4 581 252 B1**

(12) **EUROPÄISCHE PATENTSCHRIFT**

(45) Veröffentlichungstag und Bekanntmachung des Hinweises auf die Patenterteilung:
**08.04.2026 Patentblatt 2026/15**

(21) Anmeldenummer: **23767818.0**

(22) Anmeldetag: **31.08.2023**

(51) Internationale Patentklassifikation (IPC):
**F01N 3/08** *(2006.01)*    **F01N 9/00** *(2006.01)*
**F01N 13/00** *(2010.01)*    **F02D 41/00** *(2006.01)*
**F02D 41/02** *(2006.01)*    **F02D 41/22** *(2006.01)*

(52) Gemeinsame Patentklassifikation (CPC):
**F01N 9/00; F01N 3/0828; F01N 13/009;**
**F02D 41/0295; F02D 41/22;** F01N 2570/00;
F01N 2900/0406; F01N 2900/0412;
F01N 2900/1402; F01N 2900/1411; F01N 2900/16;
F01N 2900/1622; F01N 2900/1624;
F02D 2200/0802; F02D 2200/0808;    (Forts.)

(86) Internationale Anmeldenummer:
**PCT/EP2023/073926**

(87) Internationale Veröffentlichungsnummer:
**WO 2024/047175 (07.03.2024 Gazette 2024/10)**

(54) **VERFAHREN ZUM BETREIBEN EINER ANTRIEBSEINRICHTUNG FÜR EIN KRAFTFAHRZEUG SOWIE ENTSPRECHENDE ANTRIEBSEINRICHTUNG**

METHOD FOR OPERATING A PROPULSION SYSTEM FOR A MOTORED VEHICLE AS WELL AS AN ACCORDING PROPULSION SYSTEM

PROCÉDÉ D'OPÉRATION D'UN SYSTÈME DE PROPULSION POUR UN VÉHICULE MOTORISÉ ET UN TEL SYSTÈME DE PROPULSION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **01.09.2022 DE 102022209100**

(43) Veröffentlichungstag der Anmeldung:
**09.07.2025 Patentblatt 2025/28**

(73) Patentinhaber: **AUDI AG**
**85057 Ingolstadt (DE)**

(72) Erfinder: **ODENDALL, Bodo**
**85101 Lenting (DE)**

(74) Vertreter: **Gleiss Große Schrell und Partner mbB**
**Leitzstraße 45**
**70469 Stuttgart (DE)**

(56) Entgegenhaltungen:
EP-B1- 3 546 711    DE-A1- 102014 201 304
US-A1- 2010 326 052    US-A1- 2015 337 707
US-A1- 2017 022 862    US-B2- 8 209 966

(52) Gemeinsame Patentklassifikation (CPC): (Forts.)
F02D 2200/0816; F02D 2200/0818; Y02T 10/40

**Beschreibung**

Die Erfindung betrifft ein Verfahren zum Betreiben einer Antriebseinrichtung für ein Kraftfahrzeug, die über ein Abgas erzeugendes Antriebsaggregat und eine Abgasnachbehandlungseinrichtung zur Nachbehandlung des Abgases verfügt. Die Erfindung betrifft weiterhin eine Antriebseinrichtung für ein Kraftfahrzeug.

Aus dem Stand der Technik ist beispielsweise die Druckschrift DE 10 2004 017 274 A1 bekannt. Diese beschreibt ein Verfahren zum Diagnostizieren von Emissionen in einem mehrreihigen Emissionssystem, wobei das Verfahren die Schritte umfasst: Beschaffen einer Vielzahl von Emissionsmesswerten, wobei jeder der Messwerte einer Reihe des mehrreihigen Emissionssystems entspricht; Umrechnen jedes Messwerts in einen skalierten Wert als Prozentsatz eines Schwellenwertes; Addieren der skalierten Werte, um einen Gesamtemissionswert für das mehrreihige Emissionssystem zu erhalten; und Auslösen eines Hinweises, wenn der Gesamtemissionswert den Schwellenwert überschreitet. Weitere Publikationen, die ein Verfahren zum Erkennen eines Fehlers in einer Abgasnachbehandlungseinrichtung erkennen, sind: US 2017/022862 A1, DE 10 2014 201304 A1, US 2010/326052 A1, US 2015/337707 A1, EP 3 546 711 B1 oder US 8 209 966 B2.

Es ist Aufgabe der Erfindung, ein Verfahren zum Betreiben einer Antriebseinrichtung für ein Kraftfahrzeug vorzuschlagen, welches gegenüber bekannten Verfahren Vorteile aufweist, insbesondere eine zuverlässige Beurteilung wenigstens einer stromabwärts der Abgasnachbehandlungseinrichtung noch in dem Abgas vorliegenden Abgaskomponente ermöglicht.

Dies wird erfindungsgemäß mit einem Verfahren zum Erkennen eines Fehlers eine Abgasnachbehandlungseinrichtung beim Betreiben einer Antriebseinrichtung für ein Kraftfahrzeug mit den Merkmalen des Anspruchs 1 erreicht.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar. Die Antriebseinrichtung dient dem Antreiben des Kraftfahrzeugs, insoweit also dem Bereitstellen eines auf das Antreiben des Kraftfahrzeugs gerichteten Antriebsdrehmoments. Zum Bereitstellen des Antriebsdrehmoments weist die Antriebseinrichtung das Antriebsaggregat auf. Dem Antriebsaggregat wird während eines Betriebs der Antriebseinrichtung zumindest zeitweise Kraftstoff und Frischgas zugeführt, wobei das Frischgas zumindest zeitweise Frischluft enthält. Zusätzlich kann das Frischgas Abgas aufweisen, sofern eine Abgasrückführung realisiert ist, bei welcher das von dem Antriebsaggregat erzeugte Abgas zumindest teilweise wieder in das Antriebsaggregat zurückgeführt wird, nämlich als Bestandteil des Frischgases. Der Kraftstoff und das Frischgas, die dem Antriebsaggregat zugeführt werden, bilden ein Kraftstoff-Frischgas-Gemisch mit einer bestimmten Zusammensetzung, das in dem Antriebsaggregat zur Reaktion gebracht wird.

Während des Betriebs des Antriebsaggregats fällt aufgrund der chemischen Reaktion von Kraftstoff und Frischgas miteinander Abgas an, welches in Richtung einer Außenumgebung der Antriebseinrichtung beziehungsweise des Kraftfahrzeugs abgeführt wird. Da in dem von dem Antriebsaggregat erzeugten Abgas Schadstoffe enthalten sind, wird das Abgas vor dem Entlassen in die Außenumgebung zunächst der Abgasnachbehandlungseinrichtung zugeführt. In der Abgasnachbehandlungseinrichtung werden die Schadstoffe zumindest teilweise in ungefährlichere Produkte umgesetzt. Erst nach dem Durchlaufen der Abgasnachbehandlungseinrichtung wird das Abgas in die Außenumgebung abgeführt.

Die Abgasnachbehandlungseinrichtung liegt beispielsweise als Fahrzeugkatalysator vor, insbesondere als Drei-Wege-Katalysator, Oxidationskatalysator, $NO_x$-Speicherkatalysator oder als SCR-Katalysator. Sie kann jedoch auch als Partikelfilter, insbesondere als Otto-Partikelfilter oder als Diesel-Partikelfilter ausgestaltet sein, bevorzugt mit integriertem Fahrzeugkatalysator, beispielsweise mit einer katalytischen Beschichtung. Eine Umwandlungsrate und damit die Konvertierungsleistung der Abgasnachbehandlungseinrichtung, mit welcher die Schadstoffe in die ungefährlicheren Produkte umgesetzt werden, hängen insbesondere von der Zusammensetzung des der Abgasnachbehandlungseinrichtung zugeführten Abgases und/oder von einer Speicherbeladung der Abgasnachbehandlungseinrichtung ab, welche wiederum in Zusammenhang mit der Zusammensetzung des Abgases steht. Unter der Speicherbeladung ist eine Beladung der Abgasnachbehandlungseinrichtung mit der weiteren Abgaskomponente zu verstehen, also die Menge der in der Abgasnachbehandlungseinrichtung zwischengespeicherten weiteren Abgaskomponente. Zusätzlich beeinflusst ein Zustand der Abgasnachbehandlungseinrichtung die Umwandlungsrate. Unter dem Zustand ist insbesondere ein Alterungszustand zu verstehen, der über die Lebensdauer der Abgasnachbehandlungseinrichtung hinweg stetig schlechter wird.

Die Abgasnachbehandlungseinrichtung weist eine bestimmte Speicherkapazität für die weitere Abgaskomponente auf. Unter der weiteren Abgaskomponente ist eine Abgaskomponente zu verstehen, die erfindungsgemäß von der wenigstens einen Abgaskomponente verschieden ist. Beispielsweise ist die weitere Abgaskomponente Sauerstoff, insbesondere falls das Antriebsaggregat als Otto-Brennkraftmaschine ausgestaltet ist. Liegt das Antriebsaggregat hingegen als Diesel-Brennkraftmaschine vor, so ist die weitere Abgaskomponente bevorzugt Ammoniak. Besonders bevorzugt kommt in letzterem Fall als Abgasnachbehandlungseinrichtung der bereits erwähnte SCR-Katalysator zur Verwendung.

Der Zustand der Abgasnachbehandlungseinrichtung kann beispielsweise ermittelt werden, indem zunächst die Speicherkapazität, insbesondere die Sauerstoffspeicherkapazität oder die Ammoniakspeicherkapazität, der Abgasnachbehandlungseinrichtung bestimmt wird. Aus dieser kann der Zustand abgeleitet werden. Vorzugsweise wird auf einen Defekt der Abgasnachbehandlungseinrichtung erkannt, sobald die Speicherkapazität einen Kapazitätsschwellenwert unterschreitet.

Aufgrund der stetig strenger werdenden Abgasvorschriften ist es notwendig, die stromabwärts der Abgasnachbehandlungseinrichtung vorliegende Menge an Schadstoffen zu ermitteln. Hierzu kann beispielsweise eine Messung vorgenommen werden. Dies ist jedoch aufwendig, insbesondere falls für eine Vielzahl von Abgaskomponenten Messungen vorgenommen werden müssten. Vielfach ist das Messen zudem nicht sinnvoll möglich. Aus diesem Grund ist es vorgesehen, eine Berechnung für die wenigstens eine Abgaskomponente vorzunehmen. Die Abgaskomponente ist grundsätzlich ein beliebiger Bestandteil des Abgases, insbesondere eine Komponente, deren Ausgangsstoffmengenanteil stromabwärts der Abgasnachbehandlungseinrichtung nicht gemessen wird oder nicht gemessen werden kann.

Die Berechnung baut auf dem stromaufwärts der Abgasnachbehandlungseinrichtung vorliegenden Eingangsstoffmengenanteil der Abgaskomponente auf. Der Eingangsstoffmengenanteil beschreibt den Anteil der Stoffmenge der Abgaskomponente an der Stoffmenge des Abgases. Der Eingangsstoffmengenanteil ist als Molenbruch angegeben und beschreibt insoweit quantitativ die Zusammensetzung des Abgases. Aus dem Eingangsstoffmengenanteil wird der Ausgangsstoffmengenanteil der Abgaskomponente ermittelt, der stromabwärts der Abgasnachbehandlungseinrichtung vorliegt. Auch der Ausgangsstoffmengenanteil beschreibt die Zusammensetzung des Abgases quantitativ, wobei die Stoffmenge der Abgaskomponente stromabwärts der Abgasnachbehandlungseinrichtung ins Verhältnis zu der Stoffmenge des dort vorliegenden Abgases gesetzt wird. Auch der Ausgangsstoffmengenanteil liegt insoweit als Molenbruch vor.

Das Ermitteln des Ausgangsstoffmengenanteils aus dem Eingangsstoffmengenanteil wird unter Verwendung der Reaktionsgleichung vorgenommen. Die Reaktionsgleichung beschreibt hierbei die Veränderung des Stoffmengenanteils der Abgaskomponente während des Durchlaufens der Abgasnachbehandlungseinrichtung durch das Abgas. Da sich jedoch die Umwandlungsrate beziehungsweise die Konvertierungsleistung der Abgasnachbehandlungseinrichtung mit der Zeit ändert, ist eine Anpassung der Reaktionsgleichung an den Zustand der Abgasnachbehandlungseinrichtung notwendig, um den Ausgangsstoffmengenanteil mit hoher Genauigkeit zu ermitteln. Aus diesem Grund wird die Berechnungsgröße, die in der Reaktionsgleichung enthalten ist, in Abhängigkeit von der Speicherkapazität der Abgasnachbehandlungseinrichtung bestimmt. Durch das Einfließen der Speicherkapazität der Abgasnachbehandlungseinrichtung in die Reaktionsgleichung wird die Genauigkeit des ermittelten Ausgangsstoffmengenanteils deutlich erhöht. Insbesondere wird die Reaktionsgleichung in Richtung größerer Reaktionsgeschwindigkeiten angepasst, je größer die Speicherkapazität ist. Umgekehrt wird die Reaktionsgleichung in Richtung kleinerer Reaktionsgeschwindigkeiten angepasst, je kleiner die Speicherkapazität ist. Folglich wird eine Alterung der Abgasnachbehandlungseinrichtung zuverlässig berücksichtigt.

Erfindungsgemäß ist es vorgesehen, bei einem Überschreiten eines Schwellenwerts durch den Ausgangsstoffmengenanteil auf einen Fehler der Abgasnachbehandlungseinrichtung zu erkennen. In diesem Fall kann zum Beispiel einem Fahrer des Kraftfahrzeugs ein Fehlersignal angezeigt und/oder das Antriebsaggregat derart angesteuert werden, dass sich der Ausgangsstoffmengenanteil in Richtung des Schwellenwerts verändert, insbesondere bis auf diesen. Falls die Ausgangsstoffmengenanteile mehrerer Abgaskomponenten ermittelt werden, so wird vorzugsweise jeder Abgaskomponente ein separater Schwellenwert zugeordnet, mit welchem der jeweilige Ausgangsstoffmengenanteil verglichen wird.

Es kann vorgesehen sein, aus dem Ausgangsstoffmengenanteil und einem Massendurchsatz des Abgases, insbesondere also dem Abgasmassenstrom, einen Durchsatz der Abgaskomponente zu ermitteln. Vorzugsweise wird der Durchsatz über der Zeit aufintegriert, sodass sich eine Menge der Abgaskomponente ergibt. Aus dieser Menge kann unter Verwendung der von dem Kraftfahrzeug in der Zeit zurückgelegten Strecke eine streckenbezogene Menge ermittelt werden, zum Beispiel in der Einheit g/km. Die streckenbezogene Menge wird wiederum mit einem Schwellenwert verglichen und bei einem Überschreiten des Schwellenwerts durch die streckenbezogene Menge auf den Fehler der Abgasnachbehandlungseinrichtung erkannt.

Eine Weiterbildung der Erfindung sieht vor, dass als die wenigstens eine Berechnungsgröße eine der folgenden Größen verwendet wird: Geschwindigkeitskonstante, Ausgangsgeschwindigkeitskonstante, Anpassungsgröße, Aktivierungsenergie und Reaktionshemmungsgröße. Unter der Geschwindigkeitskonstante ist insbesondere die Geschwindigkeitskonstante der für die Abgaskomponente ablaufenden chemischen Reaktion in der Abgasnachbehandlungseinrichtung zu verstehen. Die Geschwindigkeitskonstante ist üblicherweise temperaturabhängig und liegt insoweit zumindest als Funktion der Temperatur und hier zusätzlich als Funktion der Speicherkapazität vor.

Die Geschwindigkeitskonstante kann in die Ausgangsgeschwindigkeitskonstante und die Anpassungsgröße unterteilt beziehungsweise aus diesen Größen ermittelt werden. Vorzugsweise ergibt sich die Geschwindigkeitskonstante aus einer Multiplikation der Ausgangsgeschwindigkeitskonstante mit der Anpassungsgröße. Die Ausgangsgeschwindigkeitskonstante beschreibt hierbei die Geschwindigkeitskonstante bei einer definierten Temperatur, insbesondere bei einer Ausgangstemperatur $T_0$. Die Ausgangstemperatur entspricht vorzugsweise einer Temperatur bei Standardbedingungen, beispielsweise beträgt sie 0 °C oder 20 °C. Die Ausgangsgeschwindigkeitskonstante liegt entsprechend für eine konstante Temperatur vor und ist daher für eine gegebene Abgaskomponente nur von der Speicherkapazität abhängig.

Die Anpassungsgröße beschreibt den Einfluss der Temperatur auf die Geschwindigkeitskonstante, ausgehend von der Ausgangsgeschwindigkeitskonstante. Sie beruht insoweit insbesondere auf der Ausgangstemperatur und der momentanen Temperatur. Die Anpassungsgröße ist von der Temperatur und der Speicherkapazität abhängig. Zusätzlich kann in die Anpassungsgröße die Aktivierungsenergie einfließen. Unter der Aktivierungsenergie ist diejenige Energie zu verstehen, welche überwunden werden muss, damit die von der Reaktionsgleichung beschriebene chemische Reaktion ablaufen kann. Die Aktivierungsenergie ist für eine gegebene Abgaskomponente allein von der Speicherkapazität abhängig.

Die Reaktionshemmungsgröße schließlich beschreibt den Einfluss eines momentanen Speicherfüllstands der Abgasnachbehandlungseinrichtung mit der weiteren Abgaskomponente auf die Reaktionsgeschwindigkeit beziehungsweise die Geschwindigkeitskonstante. Die Reaktionshemmungsgröße ist insoweit vorzugsweise sowohl von dem Speicherfüllstand als auch von der Speicherkapazität abhängig beziehungsweise liegt als Funktion von diesen vor. Wenigstens eine der genannten Größen findet in der Reaktionsgleichung Berücksichtigung. Beispielsweise werden jedoch mehrere oder sogar alle der Größen im Rahmen der Reaktionsgleichung verwendet, um den Ausgangsstoffmengenanteil der Abgaskomponente zu ermitteln. Bevorzugt finden die Ausgangsgeschwindigkeitskonstante, die Aktivierungsenergie und die Reaktionshemmungsgröße als von der Speicherkapazität abhängige Berechnungsgrößen in der Reaktionsgleichung Anwendung. Hierdurch wird eine besonders hohe Genauigkeit erzielt.

Eine Weiterbildung der Erfindung sieht vor, dass die Geschwindigkeitskonstante aus der Ausgangsgeschwindigkeitskonstante und der Anpassungsgröße ermittelt wird. Hierauf wurde bereits hingewiesen. Die Geschwindigkeitskonstante ergibt sich insbesondere aus einer Multiplikation der Ausgangsgeschwindigkeitskonstante mit der Anpassungsgröße. Die Anpassungsgröße kann insoweit auch als Reaktionsgeschwindigkeitsfaktor bezeichnet werden. Die Verwendung der beiden Größen zum Ermitteln der Geschwindigkeitskonstante ermöglicht die hohe Genauigkeit bei dem Ermitteln des Ausgangsstoffmengenanteils.

Eine Weiterbildung der Erfindung sieht vor, dass die Geschwindigkeitskonstante mit der Reaktionshemmungsgröße korrigiert wird. Es wurde bereits erwähnt, dass der Speicherfüllstand die Reaktionsgeschwindigkeit beeinflussen kann. Dies wird über die Reaktionshemmungsgröße berücksichtigt, welche aus dem Speicherfüllstand ermittelt wird. Vorzugsweise ergibt sich die in der Reaktionsgleichung verwendete Berechnungsgröße aus einer Multiplikation der Geschwindigkeitskonstante mit der Reaktionshemmungsgröße beziehungsweise wird die in der Reaktionsgleichung verwendete Reaktionsgeschwindigkeit durch Multiplikation mit der Reaktionshemmungsgröße korrigiert. Auch hierdurch ergibt sich die bereits erwähnte hohe Genauigkeit.

Eine Weiterbildung der Erfindung sieht vor, dass die wenigstens eine Berechnungsgröße in Abhängigkeit von der Speicherkapazität mittels einer mathematischen Beziehung, einem Kennfeld oder einer Tabelle ermittelt wird. Die mathematische Beziehung, das Kennfeld oder die Tabelle weisen insoweit als Eingangsgröße die Speicherkapazität und als Ausgangsgröße die wenigstens eine Berechnungsgröße auf. Finden mehrere Berechnungsgrößen in der Reaktionsgleichung Verwendung, so liegt vorzugsweise für jede der verwendeten Berechnungsgrößen eine separate mathematische Beziehung, ein separates Kennfeld oder eine Tabelle vor.

Beispielsweise werden für alle Berechnungsgrößen Kennfelder herangezogen. Es kann jedoch selbstverständlich auch vorgesehen sein, dass eine der Berechnungsgröße mittels eines Kennfelds und eine andere Berechnungsgröße mittels einer mathematischen Beziehung oder einer Tabelle bestimmt wird. Die mathematische Beziehung, das Kennfeld oder die Tabelle werden vorzugsweise bereits ab Werk in der Antriebseinrichtung beziehungsweise einem Steuergerät der Antriebseinrichtung hinterlegt, insbesondere unveränderlich. Die beschriebene Vorgehensweise ermöglicht das genaue Ermitteln des Ausgangsstoffmengenanteil der Abgaskomponente.

Eine Weiterbildung der Erfindung sieht vor, dass als die wenigstens eine Abgaskomponente eine der folgenden Komponenten verwendet wird: Kohlenwasserstoff, insbesondere Gesamtkohlenwasserstoff, Kohlenstoffoxid, insbesondere Kohlenstoffmonoxid und/oder Kohlenstoffdioxid, Wasserstoff, Methan, Ammoniak, Sauerstoff und Stickstoffoxid, insbesondere Stickstoffmonoxid und/oder Stickstoffdioxid. Unter dem Kohlenwasserstoff ist insbesondere ein beliebiger Kohlenwasserstoff zu verstehen, beispielsweise Methan. Besonders bevorzugt wird jedoch der Gesamtkohlenwasserstoff (THC) herangezogen, also mehrere oder alle in dem Abgas vorliegenden Kohlenwasserstoffe.

Das Ermitteln des Ausgangsstoffmengenanteils aus dem jeweiligen Eingangsstoffmengenanteil wird für wenigstens eine der genannten Abgaskomponenten vorgenommen, bevorzugt jedoch für mehrere der Komponenten. Besonders bevorzugt wird es für alle der genannten Komponenten durchgeführt. Das bedeutet, dass für jede der genannten Komponenten aus dem jeweiligen Eingangsstoffmengenanteil der jeweilige Ausgangsstoffmengenanteil ermittelt wird, nämlich unter Verwendung einer jeweiligen Reaktionsgleichung mit einer jeweiligen Berechnungsgröße, die in Abhängigkeit von der Speicherkapazität der Abgasnachbehandlungseinrichtung ermittelt wird. Folglich sind die Ausgangsstoffmengenanteile zahlreicher unterschiedlicher Abgaskomponenten stromabwärts der Abgasnachbehandlungseinrichtung bekannt.

Eine Weiterbildung der Erfindung sieht vor, dass der Eingangsstoffmengenanteil für einen momentan vorliegenden Betriebspunkt des Antriebsaggregats ermittelt wird. Der Eingangsstoffmengenanteil entspricht einer Rohemission der Abgaskomponente aus dem Antriebsaggregat, insoweit also dem Stoffmengenanteil der Abgaskomponente an dem strömungstechnisch zwischen dem Antriebsaggregat und der Abgasnachbehandlungseinrichtung vorliegenden Abgas. Der Eingangsstoffmengenanteil wird für die wenigstens eine Abgaskomponente für den momentan vorliegenden Betriebspunkt des Antriebsaggregats ermittelt, wobei sich der Betriebspunkt insbesondere durch eine Drehzahl des Antriebsaggregats und/oder ein von dem Antriebsaggregat bereitgestelltes Antriebsdrehmoment auszeichnet.

Das Ermitteln des Eingangsstoffmengenanteil erfolgt vorzugsweise wiederum mittels einer mathematischen Beziehung, einem Kennfeld oder einer Tabelle, wobei der Betriebspunkt als Eingangsgröße und der Eingangsstoffmengenanteil als Ausgangsgröße verwendet wird. Diese Vorgehensweise ermöglicht die Ermittlung des Eingangsstoffmengenanteil für die wenigstens eine Abgaskomponente mit hoher Genauigkeit und entsprechend eine präzise Bestimmung des Ausgangsstoffmengenanteil.

Eine Weiterbildung der Erfindung sieht vor, dass als Reaktionsgleichung die Beziehung

$$y_2 = y_1 e^{-\left(\frac{k(T_0)e^{\frac{E}{R}\left(\frac{1}{T_0}-\frac{1}{T}\right)}\Theta}{\dot{n}}l\right)}$$

verwendet wird, wobei $y_1$ der Eingangsstoffmengenanteil, $y_2$ der Ausgangsstoffmengenanteil, k die Geschwindigkeitskonstante, E die Aktivierungsenergie, R die allgemeine Gaskonstante, $T_0$ die Temperatur bei Standardbedingungen, T die momentane Temperatur, $\Theta$ die Reaktionshemmungsgröße, l eine Länge und $\dot{n}$ ein flächenbezogener Stoffmengendurchsatz ist.

Die Beziehung wird wie folgt hergeleitet:

$$\dot{n}\frac{dy}{dl} = -r,$$

wobei y der dimensionslose Stoffmengenanteil der Abgaskomponente und r die Reaktionsgeschwindigkeit in der Einheit mol/(s m³) ist. Der Stoffmengendurchsatz hat die Einheit mol/(s m²). Mit

$$r = k(T)\,y$$

wobei k die Geschwindigkeitskonstante in der Einheit mol/(s m³) ist, ergibt sich folglich die Beziehung

$$\dot{n}\frac{dy}{dl} = -k(T)\,y$$

Durch Umstellen erhält man

$$\frac{dy}{y} = -\frac{k(T)}{\dot{n}}\,dl$$

Wird diese Beziehung aufintegriert, gelangt man zu

$$ln(y_2) - ln(y_1) = -\frac{k(T)}{\dot{n}}l$$

Dies umgeformt erhält man

$$ln\left(\frac{y_2}{y_1}\right) = -\frac{k(T)}{\dot{n}}l$$

Schließlich ergibt sich die Beziehung

$$y_2 = y_1 e^{-\left(\frac{k(T)}{\dot{n}}l\right)}$$

In dieser wird zusätzlich noch die dimensionslose Reaktionshemmungsgröße $\Theta$ berücksichtigt, sodass man zu der Beziehung

$$y_2 = y_1 e^{-\left(\frac{k(T)\theta}{\dot{n}}l\right)}$$

gelangt. In dieser kann wiederum die Geschwindigkeitskonstante k aufgelöst werden und es ergibt sich die Beziehung

$$y_2 = y_1 e^{-\left(\frac{k(T_0)e^{\frac{E}{R}\left(\frac{1}{T_0}-\frac{1}{T}\right)}\theta}{\dot{n}}l\right)}$$

Eine Weiterbildung der Erfindung sieht vor, dass die Reaktionsgleichung für einen Teilabschnitt der Abgasnachbehandlungseinrichtung verwendet wird und für wenigstens einen weiteren Teilabschnitt der Abgasnachbehandlungseinrichtung ebenfalls die Reaktionsgleichung herangezogen wird, wobei die wenigstens eine in der Reaktionsgleichung enthaltene Berechnungsgröße in Abhängigkeit von der Speicherkapazität der Abgasnachbehandlungseinrichtung ermittelt wird, und wobei der für den Teilabschnitt ermittelte Ausgangsstoffmengenanteil für den mindestens einen weiteren Teilabschnitt als Eingangsstoffmengenanteil verwendet wird.

Die Reaktionsgleichung beschreibt insoweit nicht die gesamte Abgasnachbehandlungseinrichtung, sondern lediglich den Teilabschnitt. Entsprechend ist es notwendig, eine Berechnung auch für den wenigstens einen weiteren Teilabschnitt durchzuführen. Der Teilabschnitt und der wenigstens eine weitere Teilabschnitt bilden einen Bestandteil von mehreren Teilabschnitten, in welche die Abgasnachbehandlungseinrichtung unterteilt ist, insbesondere in Richtung einer Hauptströmungsrichtung des Abgases durch die Abgasnachbehandlungseinrichtung.

Für jeden der Teilabschnitte, also insbesondere für den Teilabschnitt und den wenigstens einen weiteren Teilabschnitt, liegt der Eingangsstoffmengenanteil und der Ausgangsstoffmengenanteil vor. Der Eingangsstoffmengenanteil stellt die Eingangsgröße und der Ausgangsstoffmengenanteil die Ausgangsgröße dar. Der Eingangsstoffmengenanteil des am weitesten stromaufwärts liegenden der Teilabschnitte wird gleich dem stromaufwärts der Abgasnachbehandlungseinrichtung vorliegenden Eingangsstoffmengenanteil gesetzt. Der stromabwärts der Abgasnachbehandlungseinrichtung vorliegende Ausgangsstoffmengenanteil wird gleich dem Ausgangsstoffmengenanteil des am weitesten stromabwärts liegenden Teilabschnitts gesetzt.

Mit Ausnahme des am weitesten stromaufwärts liegenden der Teilabschnitte wird für jeden der Teilabschnitte der jeweilige Eingangsstoffmengenanteil gleich dem Ausgangsstoffmengenanteil des unmittelbar stromaufwärts des jeweiligen Teilabschnitts vorliegende der Teilabschnitte gesetzt. Für jeden der Teilabschnitte wird analog zu der Vorgehensweise für den Teilabschnitt vorgegangen. Allerdings wird, falls die Temperatur benötigt wird, die in dem jeweiligen Teilabschnitts vorliegende Temperatur verwendet. Hierdurch wird eine hohe Genauigkeit des beschriebenen Verfahrens erzielt.

Die Erfindung betrifft weiterhin eine Antriebseinrichtung für ein Kraftfahrzeug, insbesondere zur Durchführung des Verfahrens gemäß den Ausführungen im Rahmen dieser Beschreibung, wobei die Antriebseinrichtung über ein Abgas erzeugendes Antriebsaggregat und eine Abgasnachbehandlungseinrichtung zur Nachbehandlung des Abgases verfügt. Dabei ist die Antriebseinrichtung dazu vorgesehen und ausgestaltet, für wenigstens eine Abgaskomponente des Abgases aus einem stromaufwärts der Abgasnachbehandlungseinrichtung vorliegenden Eingangsstoffmengenanteil der Abgaskomponente einen stromabwärts der Abgasnachbehandlungseinrichtung vorliegenden Ausgangsstoffmengenanteil der Abgaskomponente mittels einer Reaktionsgleichung zu ermitteln, wobei wenigstens eine in der Reaktionsgleichung enthaltene Berechnungsgröße in Abhängigkeit von einer Speicherkapazität der Abgasnachbehandlungseinrichtung für eine weitere Abgaskomponente bestimmt wird.

Auf die Vorteile einer derartigen Ausgestaltung der Antriebseinrichtung beziehungsweise einer derartigen Vorgehensweise wurde bereits hingewiesen. Sowohl die Antriebseinrichtung als auch das Verfahren zu ihrem Betreiben können gemäß den Ausführungen im Rahmen dieser Beschreibung weitergebildet sein, sodass insoweit auf diese verwiesen wird.

Die Erfindung wird nachfolgend anhand der der Zeichnung dargestellten Ausführungsbeispiele näher erläutert, ohne dass eine Beschränkung der Erfindung erfolgt. Dabei zeigt:

Figur 1    eine schematische Darstellung eines Bereichs einer Antriebseinrichtung, nämlich einer Abgasnachbehandlungseinrichtung der Antriebseinrichtung, sowie

Figur 2    eine schematische Detaildarstellung eines Teilabschnitt der Abgasnachbehandlungseinrichtung.

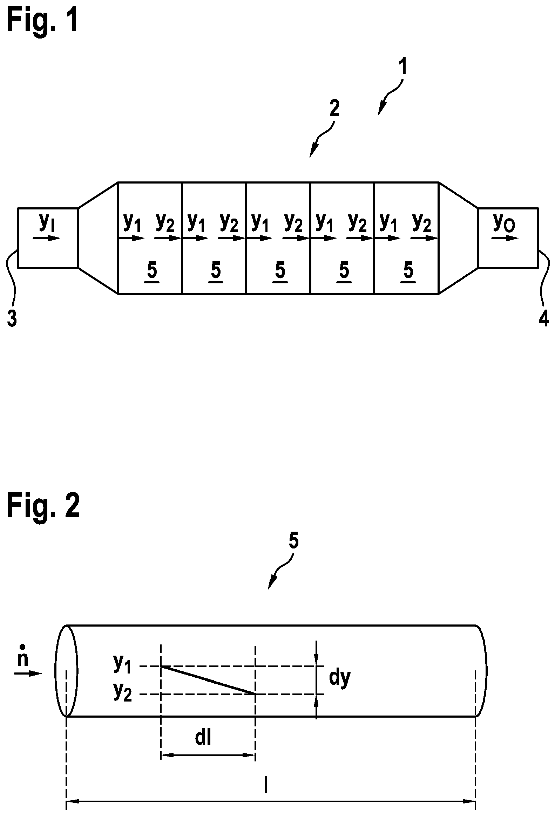

Die Figur 1 zeigt eine schematische Darstellung eines Bereichs einer Antriebseinrichtung 1 für ein Kraftfahrzeug, nämlich einer Abgasnachbehandlungseinrichtung 2. Die Abgasnachbehandlungseinrichtung 2 liegt hier in Form eines Fahrzeugkatalysators vor. Sie weist einen Einlassanschluss 3 und einen Auslassanschluss 4 auf. Über den Einlassanschluss 3 wird der Abgasnachbehandlungseinrichtung 2 Abgas eines Antriebsaggregats der Antriebseinrichtung 1 zugeführt. Das Abgas durchströmt die Abgasnachbehandlungseinrichtung 2 ausgehend von dem Einlassanschluss 3 in Richtung des Auslassanschluss S4 und strömt durch den Auslassanschluss 4 aus der Abgasnachbehandlungseinrichtung 2 in Richtung einer Außenumgebung aus.

Die Abgasnachbehandlungseinrichtung 2 ist in mehrere Teilabschnitte 5 unterteilt, in welchen katalytisch wirksames Material vorliegt. Stromaufwärts der Teilabschnitte 5 weist eine Abgaskomponente einen Eingangsstoffmengenanteil $y_l$ auf. Stromabwärts der Abgasnachbehandlungseinrichtung weist die Abgaskomponente eine Ausgangsstoffmengenanteil $y_o$ auf. Für jeden der Teilabschnitte 5 liegt ebenfalls ein Eingangsstoffmengenanteil $y_1$ und ein Ausgangsstoffmengenanteil $y_2$ vor, wobei dem Teilabschnitt die Abgaskomponente mit dem Eingangsstoffmengenanteil $y_1$ zugeführt und mit dem Ausgangsstoffmengenanteil $y_2$ entnommen wird.

Für den dem Einlassanschluss 3 am nächsten liegenden Teilabschnitt 5 entspricht der Eingangsstoffmengenanteil $y_1$ dem stromaufwärts der Abgasnachbehandlungseinrichtung 2 vorliegenden Eingangsstoffmengenanteil $y_L$. Für die sich in Strömungsrichtung des Abgases anschließenden Teilabschnitte 5 wird je-

weils der Eingangsstoffmengenanteil $y_1$ gleich dem Ausgangsstoffmengenanteil $y_2$ des unmittelbar vorhergehenden Teilabschnitts 5 gesetzt. Der Ausgangsstoffmengenanteil $y_O$ stromabwärts der Abgasnachbehandlungseinrichtung 2 wird gleich dem Ausgangsstoffmengenanteil $y_2$ des dem Auslassanschluss 4 am nächsten liegenden Teilabschnitts 5 gesetzt.

Die Figur 2 zeigt eine schematische Detaildarstellung eines der Teilabschnitte 5. Dieser weist in Hauptströmungsrichtung des Abgases eine bestimmte Länge I auf und wird von einem bestimmten Abgasmassenstrom durchströmt, der hier als durchströmungsquerschnittsflächenspezifischer Molmassenstrom mit der Einheit $mol/(m\ s^2)$ angegeben ist. Es ist dargestellt, dass sich der Stoffmengenanteil der Abgaskomponente ausgehend von dem Eingangsstoffmengenanteil $y_1$ in Richtung des Ausgangsstoffmengenanteils $y_2$ verringert und hierbei einen bestimmten Gradienten aufweist, der als dy/dl angegeben werden kann. Aufsummiert beziehungsweise aufintegriert über die Länge I des Teilabschnitts 5 ergibt sich somit der Ausgangsstoffmengenanteil $y_2$ aus dem Eingangsstoffmengenanteil $y_1$. Mit der beschriebenen Vorgehensweise kann eine äußerst hohe Genauigkeit bei dem Ermitteln des Ausgangsstoffmengenanteils $y_2$ erzielt werden.

BEZUGSZEICHENLISTE:

1     Antriebseinrichtung
2     Abgasnachbehandlungseinrichtung
3     Einlassanschluss
4     Auslassanschluss
5     Teilabschnitt

**Patentansprüche**

1. Verfahren zum Erkennen eines Fehlers einer Abgasnachbehandlungseinrichtung (2) beim Betreiben einer Antriebseinrichtung (1) für ein Kraftfahrzeug, die über ein Abgas erzeugendes Antriebsaggregat und die Abgasnachbehandlungseinrichtung (2) zur Nachbehandlung des Abgases verfügt, wobei für wenigstens eine Abgaskomponente des Abgases aus einem stromaufwärts der Abgasnachbehandlungseinrichtung (2) vorliegenden Eingangsstoffmengenanteil der Abgaskomponente ein stromabwärts der Abgasnachbehandlungseinrichtung (2) vorliegender Ausgangsstoffmengenanteil der Abgaskomponente mittels einer Reaktionsgleichung ermittelt wird, wobei bei einem Überschreiten eines Schwellenwerts durch den Ausgangsstoffmengenanteil auf einen Fehler der Abgasnachbehandlungseinrichtung erkannt wird, **dadurch gekennzeichnet, dass** wenigstens eine in der Reaktionsgleichung enthaltene Berechnungsgröße in Abhängigkeit von einer Speicherkapazität der Abgasnachbehandlungseinrichtung (2) für eine weitere Abgaskomponente des Abgases bestimmt wird, die von der Abgaskomponente verschieden ist.

2. Verfahren nach Anspruch 1, **dadurch gekennzeichnet, dass** als die wenigstens eine Berechnungsgröße eine der folgenden Größen verwendet wird: Geschwindigkeitskonstante, Ausgangsgeschwindigkeitskonstante, Anpassungsgröße, Aktivierungsenergie und Reaktionshemmungsgröße.

3. Verfahren nach Anspruch 2, **dadurch gekennzeichnet, dass** die Geschwindigkeitskonstante aus der Ausgangsgeschwindigkeitskonstante und der Anpassungsgröße ermittelt wird.

4. Verfahren nach Anspruch 2 oder 3, **dadurch gekennzeichnet, dass** die Geschwindigkeitskonstante mit der Reaktionshemmungsgröße korrigiert wird.

5. Verfahren nach einem der vorhergehenden Ansprüche, **dadurch gekennzeichnet, dass** die wenigstens eine Berechnungsgröße in Abhängigkeit von der Speicherkapazität mittels einer mathematischen Beziehung, einem Kennfeld oder einer Tabelle ermittelt wird.

6. Verfahren nach einem der vorhergehenden Ansprüche, **dadurch gekennzeichnet, dass** als die wenigstens eine Abgaskomponente eine der folgenden Komponenten verwendet wird: Kohlenwasserstoff, Kohlenstoffoxid, Wasserstoff, Methan, Ammoniak, Sauerstoff und Stickstoffoxid.

7. Verfahren nach einem der vorhergehenden Ansprüche, **dadurch gekennzeichnet, dass** der Eingangsstoffmengenanteil für einen momentan vorliegenden Betriebspunkt des Antriebsaggregats ermittelt wird.

8. Verfahren nach einem der vorhergehenden Ansprüche, **dadurch gekennzeichnet, dass** als Reaktionsgleichung die Beziehung

$$y_2 = y_1 e^{-\left(\frac{k(T_0)e^{\frac{E}{R}\left(\frac{1}{T_0}-\frac{1}{T}\right)}\Theta}{\dot{n}}l\right)}$$

verwendet wird, wobei $y_1$ der Eingangsstoffmengenanteil, $y_2$ der Ausgangsstoffmengenanteil, k die Geschwindigkeitskonstante, E die Aktivierungsenergie, R die allgemeine Gaskonstante, $T_0$ die Temperatur bei Standardbedingungen, T die momentane Temperatur, $\Theta$ die Reaktionshemmungsgröße, I eine Länge und $\dot{n}$ ein flächenbezogener Stoffmengendurchsatz ist.

**9.** Verfahren nach einem der vorhergehenden Ansprüche, **dadurch gekennzeichnet, dass** die Reaktionsgleichung für einen Teilabschnitt (5) der Abgasnachbehandlungseinrichtung (2) verwendet wird und für wenigstens einen weiteren Teilabschnitt (5) der Abgasnachbehandlungseinrichtung (2) ebenfalls die Reaktionsgleichung herangezogen wird, wobei die wenigstens eine in der Reaktionsgleichung enthaltene Berechnungsgröße in Abhängigkeit von der Speicherkapazität der Abgasnachbehandlungseinrichtung (2) ermittelt wird, und wobei der für den Teilabschnitt (5) ermittelte Ausgangsstoffmengenanteil für den mindestens einen weiteren Teilabschnitt (5) als Eingangsstoffmengenanteil verwendet wird.

**10.** Antriebseinrichtung (1) für ein Kraftfahrzeug zur Durchführung des Verfahrens nach einem oder mehreren der vorhergehenden Ansprüche, wobei die Antriebseinrichtung (1) über ein Abgas erzeugendes Antriebsaggregat und eine Abgasnachbehandlungseinrichtung (2) zur Nachbehandlung des Abgases verfügt, wobei die Antriebseinrichtung (1) dazu vorgesehen und ausgestaltet ist, für wenigstens eine Abgaskomponente des Abgases aus einem stromaufwärts der Abgasnachbehandlungseinrichtung (2) vorliegenden Eingangsstoffmengenanteil der Abgaskomponente einen stromabwärts der Abgasnachbehandlungseinrichtung vorliegenden Ausgangsstoffmengenanteil der Abgaskomponente mittels einer Reaktionsgleichung zu ermitteln, wobei bei einem Überschreiten eines Schwellenwerts durch den Ausgangsstoffmengenanteil auf einen Fehler der Abgasnachbehandlungseinrichtung erkannt wird , **dadurch gekennzeichnet, dass** mindestens eine in der Reaktionsgleichung enthaltene Berechnungsgröße in Abhängigkeit von einer Speicherkapazität der Abgasnachbehandlungseinrichtung für eine weitere Abgaskomponente des Abgases bestimmt wird, die von der Abgaskomponente verschieden ist.

## Claims

**1.** Method for detecting a fault in an exhaust gas aftertreatment device (2) when operating a drive device (1) for a motor vehicle, which has an exhaust gas-producing drive unit and the exhaust gas aftertreatment device (2) for aftertreatment of the exhaust gas, wherein for at least one exhaust gas component of the exhaust gas an output material quantity ratio of the exhaust gas component present downstream of the exhaust gas aftertreatment device (2) is determined based on an input material quantity ratio of the exhaust gas component present upstream of the exhaust gas aftertreatment device (2) by means of a reaction equation, wherein a fault in the exhaust gas aftertreatment device is detected if the output material quantity ratio exceeds a threshold value, **characterised in that** at least one computation variable contained in the reaction equation is determined as a function of a storage capacity of the exhaust gas aftertreatment device (2) for a further exhaust gas component of the exhaust gas which is different from the exhaust gas component.

**2.** Method according to claim 1, **characterised in that** one of the following variables is used as the at least one computation variable: speed constant, initial speed constant, adaption variable, activation energy and reaction inhibition variable.

**3.** Method according to claim 2, **characterised in that** the speed constant is determined from the initial speed constant and the adaption variable.

**4.** Method according to claim 2 or 3, **characterised in that** the speed constant is corrected with the reaction inhibition parameter.

**5.** Method according to one of the preceding claims, **characterised in that** the at least one computation variable is determined as a function of the storage capacity by means of a mathematical relationship, a characteristic map or a table.

**6.** Method according to one of the preceding claims, **characterised in that** one of the following components is used as the at least one exhaust gas component: hydrocarbon, carbon oxide, hydrogen, methane, ammonia, oxygen, and nitrogen oxide.

**7.** Method according to one of the preceding claims, **characterised in that** the input material quantity ratio is determined for a currently present operating point of the drive unit.

**8.** Method according to one of the preceding claims, **characterised in that** the relationship

$$y_2 = y_1 e^{-\left(\frac{k(T_0)e^{\frac{E}{R}\left(\frac{1}{T_0}-\frac{1}{T}\right)}\Theta}{\dot{n}}l\right)}$$

is used as the reaction equation, wherein $y_1$ is the input material quantity ratio, $y_2$ is the output material quantity ratio, k is the speed constant, E is the activation energy, R is the universal gas constant, $T_0$ is the temperature under standard conditions, T is the current temperature, $\Theta$ is the reaction inhibition variable, 1 is a length and $\dot{n}$ is an area-related material throughput.

**9.** Method according to one of the preceding claims, **characterised in that** the reaction equation is used for a partial section (5) of the exhaust gas aftertreatment device (2) and the reaction equation is also used for at least one further partial section (5) of the exhaust gas aftertreatment device (2), wherein the at least one computation variable contained in the reaction equation is determined as a function of the storage capacity of the exhaust gas aftertreatment device (2), and wherein the output material quantity ratio determined for the partial section (5) is used as the input material quantity ratio for the at least one further partial section (5).

10. Drive device (1) for a motor vehicle for carrying out the method according to one or more of the preceding claims, wherein the drive device (1) has an exhaust gas-generating drive unit and an exhaust gas aftertreatment device (2) for aftertreatment of the exhaust gas, wherein the drive device (1) is provided and configured to determine, for at least one exhaust gas component of the exhaust gas, an output material quantity ratio of the exhaust gas component present downstream of the exhaust gas aftertreatment device (2) based on an input material quantity ratio of the exhaust gas component present upstream of the exhaust gas aftertreatment device (2) by means of a reaction equation, wherein a fault in the exhaust gas aftertreatment device is detected if the output material quantity ratio exceeds a threshold value, **characterised in that** at least one computation variable contained in the reaction equation is determined as a function of a storage capacity of the exhaust gas aftertreatment device (2) for a further exhaust gas component of the exhaust gas which is different from the exhaust gas component.

**Revendications**

1. Procédé pour détecter un défaut d'un dispositif de post-traitement des gaz d'échappement (2) lors de l'exploitation d'un système de propulsion (1) pour un véhicule motorisé équipé d'un groupe motopropulseur produisant des gaz d'échappement et du dispositif de post-traitement des gaz d'échappement (2) pour le post-traitement des gaz d'échappement, dans lequel, pour au moins un composant des gaz d'échappement, une part de matière d'apport du composant des gaz d'échappement en aval du dispositif de post-traitement des gaz d'échappement (2) est déterminée au moyen d'une équation de réaction à partir d'une part de matière d'apport du composant des gaz d'échappement présente en amont du dispositif de post-traitement des gaz d'échappement (2), dans lequel, en cas de dépassement d'une valeur seuil par la part de matière initiale, un défaut du dispositif de post-traitement des gaz d'échappement est détecté, **caractérisé en ce qu'**au moins une grandeur de calcul contenue dans l'équation de réaction est déterminée en fonction d'une capacité de stockage du dispositif de post-traitement des gaz d'échappement (2) pour un autre composant des gaz d'échappement qui est différent du composant des gaz d'échappement.

2. Procédé selon la revendication 1, **caractérisé en ce que** l'au moins une grandeur de calcul utilisée est l'une des grandeurs suivantes : constante de vitesse, constante de vitesse initiale, grandeur d'adaptation, énergie d'activation et grandeur d'inhibition de réaction.

3. Procédé selon la revendication 2, **caractérisé en ce que** la constante de vitesse est déterminée à partir de la constante de vitesse initiale et de la grandeur d'adaptation.

4. Procédé selon la revendication 2 ou la revendication 3, **caractérisé en ce que** la constante de vitesse est corrigée en fonction de la grandeur d'inhibition de réaction.

5. Procédé selon l'une des revendications précédentes, **caractérisé en ce que** l'au moins une grandeur de calcul est déterminée en fonction de la capacité de stockage à l'aide d'une relation mathématique, d'un champ caractéristique ou d'un tableau.

6. Procédé selon l'une des revendications précédentes, **caractérisé en ce que** l'au moins un composant des gaz d'échappement utilisé est l'un des composants suivants : hydrocarbure, oxyde de carbone, hydrogène, méthane, ammoniac, oxygène et oxyde d'azote.

7. Procédé selon l'une des revendications précédentes, **caractérisé en ce que** la part de matière d'apport est déterminée pour un point de fonctionnement actuel du groupe motopropulseur.

8. Procédé selon l'une des revendications précédentes, **caractérisé en ce que** l'équation de réaction utilisée est la relation suivante

$$y_2 = y_1 e^{-\left(\frac{k(T_0)e^{\frac{E}{R}\left(\frac{1}{T_0}-\frac{1}{T}\right)}\Theta}{\dot{n}}l\right)}$$

dans laquelle $y_1$ est la part de matière d'apport, $y_2$ est la part de matière initiale, k est la constante de vitesse, E est l'énergie d'activation, R est la constante universelle des gaz, $T_0$ est la température dans des conditions standard, T est la température instantanée, $\Theta$ est le facteur d'inhibition de la réaction, l est une longueur et $\dot{n}$ est le débit massique par unité

9.  Procédé selon l'une des revendications précédentes, **caractérisé en ce que** l'équation de réaction est utilisée pour une section partielle (5) du dispositif de post-traitement des gaz d'échappement (2) et **en ce que** l'équation de réaction est également utilisée pour au moins une autre section partielle (5) du dispositif de post-traitement des gaz d'échappement (2), dans lequel l'au moins une grandeur de calcul contenue dans l'équation de réaction est déterminée en fonction de la capacité de stockage du dispositif de post-traitement des gaz d'échappement (2), dans lequel la part de matière initiale déterminée pour la section partielle (5) est utilisée comme part de matière d'apport pour au moins une autre section partielle (5).

10. Système de propulsion (1) pour un véhicule motorisé pour la mise en œuvre du procédé selon une ou plusieurs des revendications précédentes, dans lequel le système de propulsion (1) est prévu et conçu pour déterminer, pour au moins un composant des gaz d'échappement, une part de matière initiale du composant des gaz d'échappement présente en aval du dispositif de post-traitement des gaz d'échappement à l'aide d'une équation de réaction à partir d'une part de matière initiale du composant des gaz d'échappement présente en amont du dispositif de post-traitement des gaz d'échappement (2), dans lequel un défaut du dispositif de post-traitement des gaz d'échappement est détecté en cas de dépassement d'une valeur seuil par la part de matière initiale, **caractérisé en ce qu'au** moins une grandeur de calcul contenue dans l'équation de réaction est déterminée en fonction d'une capacité de stockage du dispositif de post-traitement des gaz d'échappement pour un autre composant des gaz d'échappement qui est différent du composant des gaz d'échappement.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004017274 A1
- US 2017022862 A1
- DE 102014201304 A1
- US 2010326052 A1
- US 2015337707 A1
- EP 3546711 B1
- US 8209966 B2